# EUROPEAN PATENT SPECIFICATION

(11) **EP 4 289 677 B1**
(45) Date of publication and mention of the grant of the patent: **31.12.2025**
(21) Application number: 21923667.6
(22) Date of filing: 02.02.2021
(51) Int. Cl.: B60R 21/13

(54) **VEHICLE ROLLOVER PROTECTION STRUCTURE AND CONVERTIBLE VEHICLE**
ÜBERROLLSCHUTZSTRUKTUR FÜR EIN FAHRZEUG UND CABRIOLET-FAHRZEUG
STRUCTURE DE PROTECTION DE VÉHICULE CONTRE LES TONNEAUX ET VÉHICULE DÉCAPOTABLE

(43) Date of publication of application: 13.12.2023
(73) Proprietor: Zhejiang Smart Intelligence Technology Co., Ltd., Ningbo, Zhejiang 315336 (CN)
(72) Inventor: CHEN, Fengyu, Hangzhou Bay New District, Ningbo Zhejiang 315336 (CN); SONG, Yongle, Hangzhou Bay New District, Ningbo Zhejiang 315336 (CN); FU, Qiang, Hangzhou Bay New District, Ningbo Zhejiang 315336 (CN); GUO, Yanfeng, Hangzhou Bay New District, Ningbo Zhejiang 315336 (CN); YU, Aiquan, Hangzhou Bay New District, Ningbo Zhejiang 315336 (CN)
(74) Representative: Zaboliene, Reda
(86) International application number: PCT/CN2021/074890
(87) International publication number: WO 2022/165637

(56) References cited:
- EP-A1- 0 548 461
- CN-A- 103 332 157
- CN-A- 105 377 672
- CN-A- 108 791 163
- CN-A- 108 791 164
- CN-U- 204 095 898
- DE-A1- 10 046 764
- US-A- 5 487 564
- US-A- 5 641 193

## Description

### TECHNICAL FIELD

The present invention relates to the technical field of vehicle security, and in particular, to a vehicle rollover protection structure and a convertible vehicle.

### BACKGROUND

When vehicles roll over, a hardtop model relies on reinforced structures of a top cover and side roof rails to provide protection for passengers; however, for convertible models or soft top models, due to the lack of a top cover and side roof rails, safety of passengers in the event of rollover accidents is greatly reduced.

In order to ensure safety of passengers in the event of rollover, a protective device commonly adopted for convertible or soft top models in the prior art is a pop-up anti-rollover support device, which can pop up a support arm when a convertible vehicle rolls over to protect escape space of passengers. However, this solution has very high cost and extremely complex equippment, and will occupy a large amount of vehicle space; sometimes, safety cannot be ensured due to failure of the pop-up function.

In a reference document D1 (US5641193A), a passenger, particularly a convertible, has a top and a rollover protection arrangement. In order to simplify the mounting of the top and the rollover protection device on the vehicle, while the fastening is appropriate with respect to its function, and in order to reduce the assembling time on the assembly line, the rollover protection device and the top are combined to form a pre-assembled constructional unit produced outside the vehicle.

### SUMMARY OF THE DISCLOSURE

The present invention is intended to solve the technical problem that a rollover protection device in the prior art has a complex structure, occupies large space, and has low safety and reliability.

In order to solve the above technical problem, the present invention discloses a vehicle according to claim 1.

Furthermore, a first arc connecting part and a second arc connecting part are further included; two ends of the first arc connecting part are respectively connected to one end of the top frame and one end of the first side frame; two ends of the second arc connecting part are respectively connected to the other end of the top frame and one end of the second side frame.

According to the invention, the first side frame forms a first bending part towards a tail of the vehicle, and the second side frame forms a second bending part towards the tail of the vehicle.

According to the invention, the first side frame comprises a first support rod and a second support rod, one end of the first support rod is connected to one end of the top frame, the other end of the first support rod is connected to one end of the second support rod by a first preset angle, and the other end of the second support rod is fixed at the first preset position; the second side frame comprises a third support rod and a fourth support rod, one end of the third support rod is connected to the other end of the top frame, the other end of the third support rod is connected to one end of the fourth support rod by a second preset angle, and the other end of the fourth support rod is fixed at the second preset position.

According to the invention, a range of the first preset angle is 150-180 degrees; a range of the second preset angle is 150-180 degrees.

Furthermore, the second support rod is set to tilt to the left, and the fourth support rod is set to tilt to the right; projections of the second support rod and the top frame on the floor in the vehicle appears a third preset angle, and projections of the fourth support rod and the top frame on the floor in the vehicle appears a fourth preset angle; a range of the third preset angle is 75-90 degrees; a range of the fourth preset angle is 75-90 degrees.

Furthermore, the first support rod, the second support rod, the third support rod, and the fourth support rod are all tubular support rods.

Furthermore, a support crossbeam is further included; one end of the support crossbeam is connected to a connecting portion between the first support rod and the second support rod, and the other end of the support crossbeam is connected to a connecting portion between the third support rod and the fourth support rod.

Furthermore, a first connecting element and a second connecting element are further included; the other end of the first side frame is fixed to the first preset position through the first connecting element, and the other end of the second side frame is fixed to the second preset position through the second connecting element.

A second aspect of the present invention provides a convertible vehicle comprising the vehicle rollover protection structure.

By adopting the above technical solutions, the present invention has the following advantageous effect: the vehicle rollover protection device provided by the present invention only adopts a rollover protection frame fixed on a floor in a vehicle, which has a simple structure and saves space; moreover, the top frame of the rollover protection frame is arranged behind an upper part of a seat, it can be ensured that passengers are within a protection range of the top frame in case of a rollover accident of a convertible model, thereby improving safety effectively.

### BRIEF DESCRIPTION OF THE DRAWINGS

In order to explain technical solutions of embodiments of the present invention more clearly, drawings required to be used in description of embodiments will be briefly introduced below. It is obvious that the drawings in the following description are only some embodiments of the present invention. For those skilled in the art, other drawings can be further obtained according to these drawings on the premise of paying no creative work.
FIG. 1 is a schematic view of a vehicle rollover protection structure of an embodiment of the present invention.
FIG. 2 is a schematic view of a position of a top frame of an embodiment of the present invention.
FIG. 3 is a schematic view of a position of a second support rod of an embodiment of the present invention.

The following is a supplementary explanation for the accompanying drawings: 1-top frame; 11-first arc connecting part; 12-second arc connecting part; 2-first side frame; 21-first support rod; 22-second support rod; 3-second side frame; 31-third support rod; 32-fourth support rod; 4-support crossbeam; 5-first connecting element; 6-second connecting element.

### DETAILED DESCRIPTION

The technical solutions in the embodiments of the present invention will be described clearly and completely below in combination with the drawings in the embodiments of the present invention. Obviously, the described embodiments are merely some embodiments of the present invention, rather than all embodiments. Based on the embodiments of the present invention, any other embodiment obtained by one of ordinary skill in the art on the premise of paying no creative work belongs to the protection scope of the present invention.

"One embodiment" or "embodiment" mentioned here refers to a specific feature, structure, or characteristic that can be included in at least one implementation of the present invention. In the description of embodiments of the present invention, it should be understood that orientations or positional relationships indicated by the terms "up", "down", "top", "bottom", and so on are based on orientations or positional relationships shown in the attached drawings, and only for convenience of describing the present invention and simplifying the description, rather than indicating or implying that the device or component referred to must have a specific orientation, or be constructed and operated in a specific orientation, and therefore cannot be considered as a limitation to the present invention. In addition, the terms "first" , "second" and the like are only used for the purpose of description, and cannot be understood as indicating or implying relative importance or implying the quantity of technical features indicated. Therefore, features limited by "first", "second", and the like can explicitly or implicitly include one or more of these features. Moreover, the terms "first", "second", and the like are used to distinguish similar objects, and are not necessarily used for describing a specific sequence or order. It should be understood that the data used in this way can be interchanged in appropriate cases, so that the embodiments of the present invention described here can be implemented in orders other than those illustrated or described here.

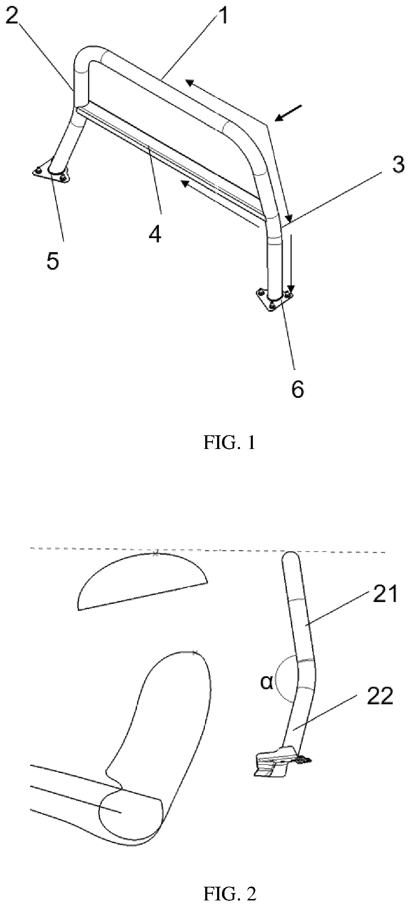

Referring to FIG. 1, FIG. 1 is a schematic view of a vehicle rollover protection structure of an embodiment of the present invention. The vehicle rollover protection structure can include a rollover protection frame, the rollover protection frame is provided behind a rear seat of a vehicle. The rollover protection frame can include a top frame 1, a first side frame 2, and a second side frame 3; two ends of the top frame a1 re respectively connected to one end of the first side frame 2 and one end of the second side frame 3; the other end of the first side frame 2 is fixed at a first preset position on a floor in the vehicle, and the other end of the second side frame 3 is fixed at a second preset position on the floor of the vehicle; the first preset position can include a left rear position relative to the rear seat, and the second preset position can include a right rear position relative to the rear seat. In this embodiment of the present invention, both the first side frame 2 and the second side frame 3 can be fixed at rear sides of a rear seat of a vehicle, it can be ensured that passengers are within a protection range of the rollover protection frame in case of a rollover accident of a convertible model.

In an embodiment of the present invention, the top frame 1 is located at an upper rear position relative to the rear seat, and a height of the top frame is higher than a height of the top of the rear seat by a preset distance, the preset distance can be adjusted based on actual needs. In an example, as shown in FIG. 2, the height of the top frame 1 can be higher than head envelops of 95% common human bodies by above 20mm.

In an embodiment of the present invention, all of the top frame 1, the first side frame 2, and the second side frame 3 can adopt tubular structures, which can effectively avoid and reduce secondary injury to passengers caused by the rollover protection frame in case of a rollover accident of a convertible model.

The vehicle rollover protection device provided by the present invention only adopts a rollover protection frame fixed on a floor in a vehicle, which has a simple structure and saves space. Moreover, in the rollover protection frame, the top frame 1 is arranged behind an upper part of a seat, and both the first side frame 2 and the second side frame 3 can be fixed at rear sides of the rear seat of the vehicle; it can be ensured that passengers are within a protection range of the rollover protection frame in case of a rollover accident of a convertible model, thereby improving safety effectively. Secondly, the rollover protection structure can be designed according to a back position of the rear seat, and spare space in the vehicle can be utilized to avoid occupying back compartment space of a small convertible vehicle.

Furthermore, as shown by the arrow in FIG. 1, regarding the vehicle rollover protection device provided by this embodiment of the present invention, in the event of a rollover accident, a single side of the top frame 1 is first subjected to a force, and the impact force can be transmitted horizontally and vertically along the top frame 1, respectively. During the process of being subjected to the force, it can be ensured that a crossbeam of the top frame 1 does not deform, and a passenger's head is always in a protected area.

In an embodiment of the present invention, a first arc connecting part 11 and a second arc connecting part 12 can be further included; two ends of the first arc connecting part 11 are respectively connected to one end of the top frame 1 and one end of the first side frame 2; two ends of the second arc connecting part 12 are respectively connected to the other end of the top frame 1 and one end of the second side frame 3. That is, in an embodiment of the present invention, the two ends of the top frame 1 can be respectively connected to the first side frame 2 and the second side frame 3 in smooth transition, and the smooth transition connection can effectively avoid damage to vehicles or pedestrians caused by the rollover protection frame when a vehicle rolls over.

In an embodiment of the present invention, the first side frame 2 forms a first bending part towards a tail of the vehicle, and the second side frame 3 forms a second bending part towards the tail of the vehicle. Implementably, the first side frame 2 includes a first support rod 21 and a second support rod 22, one end of the first support rod 21 is connected to one end of the top frame 1. As shown in FIG. 2, the other end of the first support rod 21 is connected to one end of the second support rod 22 by a first preset angle α, and the other end of the second support rod 22 is fixed at the first preset position; the other end of the first support rod 21 is connected to one end of the second support rod 22 by the first preset angle to form the first bending part. Implementably, both the first support rod 21 and the second support rod 22 can be tubular structures; the first support rod 21 can be directly connected to the second support rod 22 by the first preset angle. Implementably, the first support rod 21 can also be connected to the second support rod 22 in smooth transition; that is, an arc connecting part can be arranged between the first support rod 21 and the second support rod 22, and the first support rod 21 can be connected to the second support rod 22 by a first preset radian. The first preset radian and the first preset angle can be the same numerical value.

The second side frame 3 includes a third support rod 31 and a fourth support rod 32; one end of the third support rod 31 is connected to the other end of the top frame 1, the other end of the third support rod 31 is connected to one end of the fourth support rod 32 by a second preset angle, and the other end of the fourth support rod 32 is fixed at the second preset position. The other end of third support rod 31 is connected to one end of the fourth support rod 32 by the second preset angle to form the second bending part. Implementably, both the third support rod 31 and the fourth support rod 32 can be tubular structures; the third support rod 31 can be directly connected to the fourth support rod 32 by the second preset angle. Implementably, the third support rod 31 can be connected to the fourth support rod 32 in smooth transition; that is, an arc connecting part can be arranged between the third support rod 31 and the fourth support rod 32, and the first support rod 21 can be connected to the second support rod 22 by a second preset radian. The second preset radian and the second preset angle can be the same numerical value.

In an embodiment of the present invention, the first side frame 2 and the second side frame 3 can be in the same structure, and can be arranged symmetrically along a middle line of the top frame 1.

In an embodiment of the present invention, a range of the first preset angle can be 150-180 degrees; a range of the second preset angle can be 150-180 degrees. Implementably, the range of the first preset angle can be 155-180 degrees; the range of the second preset angle can be 155-180 degrees. The design of the angle ranges can effectively avoid the rollover protection frame forms bent points when a vehicle rolls over.

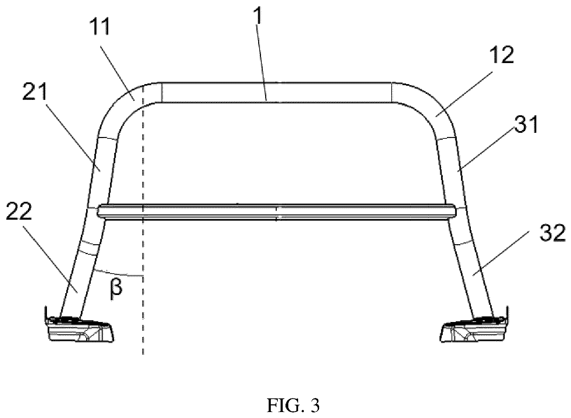

In an embodiment of the present invention, the second support rod 22 can be set to tilt to the left, and the fourth support rod 32 can be set to tilt to the right; projections of the second support rod 22 and the top frame 1 on the floor in the vehicle appears a third preset angle, and projections of the fourth support rod 32 and the top frame 1 on the floor in the vehicle appears a fourth preset angle. In an embodiment of the present invention, a range of the third preset angle can be 75-90 degrees; a range of the fourth preset angle can be 75-90 degrees. That is, an angle formed by the second support rod 22 after extending and a perpendicular line of a lateral straight line where the top frame 1 is located can be 0-15 degrees, as shown by β in FIG. 3; an angle formed by the fourth support rod 32 after extending and the lateral straight line where the top frame 1 is located can be 0-15 degrees. Implementably, the angle formed by the second support rod 22 after extending and the lateral straight line where the top frame 1 is located can be 0-15 degrees; an angle formed by the fourth support rod 32 after extending and the lateral straight line where the top frame 1 is located can be 0-15 degrees. Such angle designs can effectively ensure that the rollover protection frame forms an approximately V-shaped support when being initially subjected to a force, thereby increasing stability of the rollover protection frame.

In an embodiment, all of the first support rod 21, the second support rod 22, the third support rod 31, and the fourth support rod 32 can be tubular support rods. In an example, an area of a cross section of the top frame 1 can be larger than 78.5mm², or a diameter of the cross section is not less than 50mm; a thickness of a tube wall of the top frame 1 can be 1.6-2.0mm.

Implementably, the first support rod 21, the second support rod 22, the third support rod 31, and the fourth support rod 32 can also be in other shapes such as rectangular, rhombic, etc.

In an embodiment of the present invention, the vehicle rollover protection structure can further include a support crossbeam 4; one end of the support crossbeam is connected to a connecting portion between the first support rod 21 and the second support rod, and the other end of the support crossbeam 4 is connected to a connecting portion between the third support rod 31 and the fourth support rod 32. In this embodiment of the present invention, two ends of the support crossbeam 4 are respectively connected to the bending parts of the first side frame 2 and of the second side frame 3, and can effectively decompose impact forces on the bending parts and improve stability and safety of the rollover protection frame.

In an embodiment of the present invention, the support crossbeam 4 can also be in a tubular structure; an area of a cross section of the support crossbeam 4 can be larger than 1800mm², and a thickness of a tube wall thereof can be 1.6-2.0mm.

In an embodiment, the vehicle rollover protection structure can further includes a first connecting element 5 and a second connecting element 6; the other end of the first side frame 2 is fixed to the first preset position through the first connecting element 5, and the other end of the second side frame 3 is fixed to the second preset position through the second connecting element 6. Visually, both the first connector 5 and the second connector 6 can include fasteners such as bolts.

A second aspect of the present invention provides a convertible vehicle comprising a vehicle rollover protection structure.

The above are only preferred embodiments of the present invention, and are not intended to limit the present invention.

## Claims

1. A vehicle comprising a vehicle rollover protection structure having a rollover protection frame, wherein the rollover protection frame is provided behind a rear seat of a vehicle; the rollover protection frame comprises a top frame (1), a first side frame (2), and a second side frame (3); two ends of the top frame (1) are respectively connected to one end of the first side frame (2) and one end of the second side frame (3); the other end of the first side frame (2) is fixed at a first preset position on a floor in the vehicle, and the other end of the second side frame (3) is fixed at a second preset position on the floor of the vehicle; the first preset position comprises a left rear position relative to the rear seat, and the second preset position comprises a right rear position relative to the rear seat; a height of the top frame (1) is higher than a height of the top of the rear seat by a preset distance;
the vehicle being **characterized by** that
the first side frame (2) comprises a first support rod (21) and a second support rod (22), one end of the first support rod (21) is connected to one end of the top frame (1), the other end of the first support rod (21) is connected to one end of the second support rod (22) by a first preset angle to form a first bending part towards a tail of the vehicle, and the other end of the second support rod (22) is fixed at the first preset position; the second side frame (3) comprises a third support rod (31) and a fourth support rod (32), one end of the third support rod (31) is connected to the other end of the top frame (1), the other end of the third support rod (31) is connected to one end of the fourth support rod (32) by a second preset angle to form a second bending part towards the tail of the vehicle, and the other end of the fourth support rod (32) is fixed at the second preset position; a range of the first preset angle is 150-180 degrees, and a range of the second preset angle is 150-180 degrees.

2. The vehicle according to claim 1, wherein the vehicle rollover protection structure further comprises a first arc connecting part (11) and a second arc connecting part (12); wherein two ends of the first arc connecting part (11) are respectively connected to one end of the top frame (1) and one end of the first side frame (2); two ends of the second arc connecting part (12) are respectively connected to the other end of the top frame (1) and one end of the second side frame (3).

3. The vehicle according to claim 1 or 2, wherein the second support rod (22) is set to tilt to the left, and the fourth support rod (32) is set to tilt to the right; projections of the second support rod (22) and the top frame (1) on the floor in the vehicle appears a third preset angle, and projections of the fourth support rod (32) and the top frame (1) on the floor in the vehicle appears a fourth preset angle; a range of the third preset angle is 75-90 degrees; a range of the fourth preset angle is 75-90 degrees.

4. The vehicle according to any one of claims 1-3, wherein the first support rod, the second support rod, the third support rod, and the fourth support rod are all tubular support rods.

5. The vehicle according to any one of claims 1-4, wherein the vehicle rollover protection structure further comprises a support crossbeam (4); wherein one end of the support crossbeam (4) is connected to a connecting portion between the first support rod (21) and the second support rod (22), and the other end of the support crossbeam (4) is connected to a connecting portion between the third support rod (31) and the fourth support rod (33).

6. The vehicle according to any one of claims 1-5, wherein the vehicle rollover protection structure further comprises a first connecting element (5) and a second connecting element (6); wherein the other end of the first side frame (2) is fixed to the first preset position through the first connecting element (5), and the other end of the second side frame (3) is fixed to the second preset position through the second connecting element (6).

## Patentansprüche

1. Fahrzeug, umfassend eine Überschlagschutzvorrichtung für Fahrzeuge mit einem Überschlagschutzrahmen, wobei der Überschlagschutzrahmen hinter einem Rücksitz eines Fahrzeugs angeordnet ist, wobei der Überschlagschutzrahmen einen oberen Rahmen (1), einen ersten Seitenrahmen (2) und einen zweiten Seitenrahmen (3) umfasst; wobei beide Enden des oberen Rahmens (1) jeweils mit einem Ende des ersten Seitenrahmens (2) und einem Ende des zweiten Seitenrahmens (3) verbunden sind, wobei das andere Ende des ersten Seitenrahmens (2) an einer ersten vorgegebenen Position auf einem Boden in dem Fahrzeug befestigt ist, wobei das andere Ende des zweiten Seitenrahmens (3) an einer zweiten vorgegebenen Position auf dem Fahrzeugboden befestigt ist, wobei die erste vorgegebene Position eine links hintere Position relativ zum Rücksitz umfasst, wobei die zweite vorgegebene Position eine rechts hintere Position relativ zum Rücksitz umfasst, wobei eine Höhe des oberen Rahmens (1) um einen vorgegebenen Abstand größer als eine Höhe der Oberseitte des Rücksitzes ist,
wobei das Fahrzeug **dadurch gekennzeichnet ist, dass** der erste Seitenrahmen (2) eine erste Stützstange (21) und eine zweite Stützstange (22) umfasst, wobei ein Ende der ersten Stützstange (21) mit einem Ende des oberen Rahmens (1) verbunden ist, wobei das andere Ende der ersten Stützstange (21) mit einem Ende der zweiten Stützstange (22) unter einem ersten vorgegebenen Winkel verbunden ist, sodass ein erstes Biegeteil in Richtung Fahrzeugheck gebildet wird, wobei das andere Ende der zweiten Stützstange (22) an der ersten vorgegebenen Position befestigt ist, wobei der zweite Seitenrahmen (3) eine dritte Stützstange (31) und eine vierte Stützstange (32) umfasst, wobei ein Ende der dritten Stützstange (31) mit dem anderen Ende des oberen Rahmens (1) verbunden ist, wobei das andere Ende der dritten Stützstange (31) mit einem Ende der vierten Stützstange (32) unter einem zweiten vorgegebenen Winkel verbunden ist, sodass ein zweites Biegeteil in Richtung Fahrzeugheck gebildet wird, wobei das andere Ende der vierten Stützstange (32) an der zweiten vorgegebenen Position befestigt ist, wobei ein Bereich des ersten vorgegebenen Winkels 150-180 Grad beträgt, und wobei ein Bereich des zweiten vorgegebenen Winkels 150-180 Grad beträgt.

2. Fahrzeug nach Anspruch 1, wobei die Überschlagschutzvorrichtung für Fahrzeuge ferner ein erstes bogenförmiges Verbindungsteil (11) und ein zweites bogenförmiges Verbindungsteil (12) umfasst, wobei beide Enden des ersten bogenförmigen Verbindungsteils (11) jeweils mit einem Ende des oberen Rahmens (1) und einem Ende des ersten Seitenrahmens (2) verbunden sind, wobei beide Enden des zweiten bogenförmigen Verbindungsteils (12) jeweils mit dem anderen Ende des oberen Rahmens (1) und einem Ende des zweiten Seitenrahmens (3) verbunden sind.

3. Fahrzeug nach Anspruch 1 oder 2, wobei die zweite Stützstange (22) nach links geneigt eingestellt ist und die vierte Stützstange (32) nach rechts geneigt eingestellt ist, wobei die Projektionen der zweiten Stützstange (22) und des oberen Rahmens (1) auf dem Boden in dem Fahrzeug einen dritten vorgegebenen Winkel bilden, wobei die Projektionen der vierten Stützstange (32) und des oberen Rahmens (1) auf dem Boden in dem Fahrzeug einen vierten vorgegebenen Winkel bilden, wobei ein Bereich des dritten vorgegebenen Winkels 75-90 Grad beträgt, wobei ein Bereich des vierten vorgegebenen Winkels 75-90 Grad beträgt.

4. Fahrzeug nach einem der Ansprüche 1 bis 3, wobei die erste Stützstange, die zweite Stützstange, die dritte Stützstange und die vierte Stützstange alle Rohrstützstangen sind.

5. Fahrzeug nach einem der Ansprüche 1 bis 4, wobei die Überschlagschutzvorrichtung ferner einen Stützquerträger (4) umfasst, wobei ein Ende des Stützquerträgers (4) mit einem Verbindungsabschnitt zwischen der ersten Stützstange (21) und der zweiten Stützstange (22) verbunden ist, und wobei das andere Ende des Stützquerträgers (4) mit einem Verbindungsabschnitt zwischen der dritten Stützstange (31) und der vierten Stützstange (33) verbunden ist.

6. Fahrzeug nach einem der Ansprüche 1 bis 5, wobei die Überschlagschutzvorrichtung ferner ein erstes Verbindungselement (5) und ein zweites Verbindungselement (6) umfasst, wobei das andere Ende des ersten Seitenrahmens (2) über das erste Verbindungselement (5) an der ersten vorgegebenen Position befestigt ist, und wobei das andere Ende des zweiten Seitenrahmens (3) über das zweite Verbindungselement (6) an der zweiten vorgegebenen Position befestigt ist.

## Revendications

1. Véhicule comprenant une structure de protection contre le tonneau de véhicule ayant un cadre de protection contre le tonneau, dans lequel le cadre de protection contre le tonneau est prévu derrière un siège arrière d'un véhicule ; le cadre de protection contre le tonneau comprend un cadre supérieur (1), un premier cadre latéral (2) et un second cadre latéral (3) ; deux extrémités du cadre supérieur (1) sont respectivement reliées à une extrémité du premier cadre latéral (2) et à une extrémité du second cadre latéral (3) ; l'autre extrémité du premier cadre latéral (2) est fixée au niveau d'une première position prédéfinie sur le plancher du véhicule, et l'autre extrémité du second cadre latéral (3) est fixée au niveau d'une seconde position prédéfinie sur le plancher du véhicule ; la première position prédéfinie comprend une position arrière gauche par rapport au siège arrière, et la seconde position prédéfinie comprend une position arrière droite par rapport au siège arrière ; une hauteur du cadre supérieur (1) est supérieure à une hauteur de la partie supérieure du siège arrière d'une distance prédéfinie ;
le véhicule étant **caractérisé en ce que** le premier cadre latéral (2) comprend une première tige de support (21) et une deuxième tige de support (22), une extrémité de la première tige de support (21) est reliée à une extrémité du cadre supérieur (1), l'autre extrémité de la première tige de support (21) est reliée à une extrémité de la deuxième tige de support (22) selon un premier angle prédéfini afin de former une première partie courbée vers l'arrière du véhicule, et l'autre extrémité de la deuxième tige de support (22) est fixée au niveau de la première position prédéfinie ; le second cadre latéral (3) comprend une troisième tige de support (31) et une quatrième tige de support (32), une extrémité de la troisième tige de support (31) est reliée à l'autre extrémité du cadre supérieur (1), l'autre extrémité de la troisième tige de support (31) est reliée à une extrémité de la quatrième tige de support (32) selon un deuxième angle prédéfini afin de former une seconde partie courbée vers l'arrière du véhicule, et l'autre extrémité de la quatrième tige de support (32) est fixée au niveau de la seconde position prédéfinie ; la plage du premier angle prédéfini est comprise entre 150 et 180 degrés, et la plage du deuxième angle prédéfini est comprise entre 150 et 180 degrés.

2. Véhicule selon la revendication 1, dans lequel la structure de protection contre le tonneau de véhicule comprend en outre une première partie de liaison en arc (11) et une seconde partie de liaison en arc (12) ; dans lequel deux extrémités de la première partie de liaison en arc (11) sont respectivement reliées à une extrémité du cadre supérieur (1) et à une extrémité du premier cadre latéral (2) ; deux extrémités de la seconde partie de liaison en arc (12) sont respectivement reliées à l'autre extrémité du cadre supérieur (1) et à une extrémité du second cadre latéral (3).

3. Véhicule selon la revendication 1 ou 2, dans lequel la deuxième tige de support (22) est réglée pour s'incliner vers la gauche, et la quatrième tige de support (32) est réglée pour s'incliner vers la droite ; des projections de la deuxième tige de support (22) et du cadre supérieur (1) sur le plancher du véhicule forment un troisième angle prédéfini, et des projections de la quatrième tige de support (32) et du cadre supérieur (1) sur le plancher du véhicule forment un quatrième angle prédéfini ; la plage du troisième angle prédéfini est comprise entre 75 et 90 degrés ; la plage du quatrième angle prédéfini est comprise entre 75 et 90 degrés.

4. Véhicule selon l'une quelconque des revendications 1 à 3, dans lequel la première tige de support, la deuxième tige de support, la troisième tige de support et la quatrième tige de support sont toutes des tiges de support tubulaires.

5. Véhicule selon l'une quelconque des revendications 1 à 4, dans lequel la structure de protection contre le tonneau de véhicule comprend en outre une traverse de support (4) ; dans lequel une extrémité de la traverse de support (4) est reliée à une partie de liaison entre la première tige de support (21) et la deuxième tige de support (22), et l'autre extrémité de la traverse de support (4) est reliée à une partie de liaison entre la troisième tige de support (31) et la quatrième tige de support (33).

6. Véhicule selon l'une quelconque des revendications 1 à 5, dans lequel la structure de protection contre le tonneau de véhicule comprend en outre un premier élément de liaison (5) et un second élément de liaison (6) ; dans lequel l'autre extrémité du premier cadre latéral (2) est fixée à la première position prédéfinie par l'intermédiaire du premier élément de liaison (5), et l'autre extrémité du second cadre latéral (3) est fixée à la seconde position prédéfinie par l'intermédiaire du second élément de liaison (6).
